# EUROPEAN PATENT SPECIFICATION

(11) **EP 1 455 109 B1**
(45) Date of publication and mention of the grant of the patent: **29.11.2006**
(21) Application number: 04005314.2
(22) Date of filing: 05.03.2004
(51) Int. Cl.: F16D 65/097, F16D 65/02

(54) **Anti-squeal shim for a disc brake**
Zwischenlage zum Verhindern des Bremsquietschens in einer Scheibenbremse
Cale pour empécher le grincement d'un frein à disque

(30) Priority: 06.03.2003 JP 2003060030
(43) Date of publication of application: 08.09.2004
(73) Proprietor: NICHIAS CORPORATION, Tokyo (JP)
(72) Inventor: Niwa, Takahiro, Tokyo (JP); Yoshihara, Masaki, Yokohama-shi, Kanagawa (JP); Kondo, Junichi, Ikoma-gun, Nara (JP); Arai, Tadashi, Ikoma-gun, Nara (JP)
(74) Representative: Grünecker, Kinkeldey, Stockmair & Schwanhäusser Anwaltssozietät

(56) References cited:
- EP-A- 0 282 129
- EP-A- 0 540 332
- JP-A- 7 071 519
- US-A- 3 918 555
- US-A- 5 975 252

## Description

### FIELD OF THE INVENTION

The present invention relates to an anti-squeal shim to be interposed between a pressing member for pressing a brake pad toward a disc rotor and a back plate of the brake pad in a disc brake used in an automobile, etc.

### BACKGROUND OF THE INVENTION

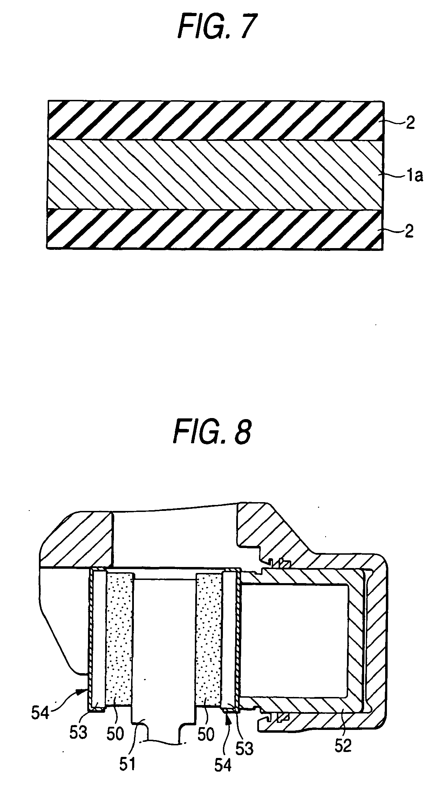

As shown in Fig. 8, A disc brake widely used in such as an automobile has the structure that brake pads 50 are pressed toward a disc rotor 51 from both sides thereof by pressing the brake pads 50 with pressing members 52, the brake pads 50 being arranged on both sides of the disc rotor 51 rotating integrally with a wheel. In such a case, when the brake pads 50 are pressed toward the disc rotor 51, brake parts 53 are vibrated by relative displacement between back plates 53 of the brake pads 50 and the pressing members 52 or frictional vibration developed between the brake pads 50 and the disc rotor 51, which sometimes causes the occurrence of abnormal noise which is generally referred to as "squeal".

In order to prevent the occurrence of such "squeal", it has been widely carried out that an anti-squeal shim having the structure that rubber layers 2 are secured on both sides of a cored metal plate 1a formed of a thin iron plate such as a cold rolled plate as shown in Fig. 7 is provided and the anti-squeal shim 54 is interposed between the brake pad and the pressing member as shown in Fig. 8, thereby reducing the noise (for example, see reference 1).

### [Reference 1]

JP-A-6-94057 (the term "JP-A" as used herein means an "unexamined published Japanese patent application")

### SUMMARY OF THE INVENTION

JP-A-7071519 discloses an anti-squeal shim in accordance with the preamble of claim 1.

It is unavoidable that the anti-squeal effect of an anti-squeal shim decreases with time. This is caused by that the rubber layers 2 wear away with time to allow the cored metal plate 1a to be exposed, and water acts thereon to start rusting, resulting in separation of the rubber layers 2 and a decrease in strength with the passage of time. Further, such a decrease in the anti-squeal effect with time becomes significant particularly in areas where snow-melting agents are scattered in winter.

The present invention was accomplished under such circumstances, and an object thereof is to provide a longer-lived anti-squeal shim in which the development of rust on the cored metal plate is inhibited.

In order to achieve the above-mentioned object, the present invention provides an anti-squeal shim according to claim 1.

### BRIEF DESCRIPTION OF THE DRAWINGS

The present invention will be described in further detail with reference to the accompanying drawings wherein:
Fig. 1 is a cross-sectional view showing an anti-squeal shim.
Fig. 2 is a cross-sectional view showing further anti-squeal shim.
Fig. 3 is a cross-sectional view showing an anti-squeal shim according to the present invention.
Fig. 4 is a cross-sectional view showing an example of a structure for attaching an anti-squeal shim of the present invention to a back plate of a disc pad. A shim of Figure 1 is shown as an example therein.
Fig. 5 is a cross-sectional view showing another example of a structure for attaching an anti-squeal shim of the present invention to a back plate of a disc pad.
Fig. 6 is a graph showing results of measurement of the rate of squeal occurrence-2.
Fig. 7 is a cross-sectional view showing an example of a conventional anti-squeal shim.
Fig. 8 is a cross-sectional view showing an example of a conventional disc brake.

### DETAILED DESCRIPTION OF THE INVENTION

The present invention will be illustrated with reference to the drawings in detail below.

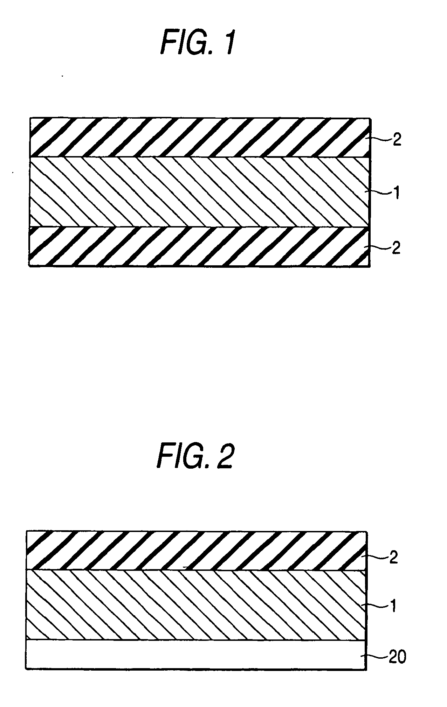

Fig. 1 is a cross-sectional view showing an anti-squeal shim. As shown in the drawing, the anti-squeal shim is constituted by firmly fixing rubber layers 2 onto both sides of a plated steel plate 1. In general, the plated steel plates are classified into two types: a steel plate plated with a metal more corrosion-inhibiting than iron, such as a nickel-plated steel plate; and a steel plate plated with a metal more corrosion-prone than iron, such as an aluminum-plated steel plate. The former plated steel plate prevents iron from contacting with air or water, thereby improving corrosion resistance. Further, in the latter plated steel plate, a metal in a plated layer is sacrificially corroded instead of iron, so that corrosion of iron is prevented (this effect is hereinafter referred to as the "sacrificial anti-corrosion effect"). Accordingly, the former plated steel plate is effective for products or parts used for applications in which unplated portions of steel plate ends are difficult to directly contact with air or moisture. However, when unplated ends easily contact with air or moisture, such as a brake shim, the former plated steel plate has the problem that corrosion proceeds from the ends. However, when the latter plated steel plate is used, even the ends unplated can obtain the sacrificial anti-corrosion effect of the plated layer in close proximity to the ends, thereby being able to prevent corrosion of iron. Further, the latter plated steels include a galvanized steel plate and an aluminized steel plate. In the aluminized steel plate, corrosion of aluminum itself proceeds too fast, so that the effective period of sacrificial anti-corrosion is short. The aluminized steel plate is therefore unsuitable for parts used for a long period of time as long as several years or more, such as the brake shim. Accordingly, a plating in which zinc is mainly employed is used for the plated steel plate in the present invention. As the plated steel plate 1, such as a zinc electroplated steel plate, a zinc alloy electroplated steel plate, a zinc hot-dipped steel plate, a zinc alloy hot-dipped steel plate and a lead-tin alloy plated steel plate can be suitably used. In order to maintain corrosion resistance, the zinc alloy electroplated steel plate and the zinc alloy hot-dipped steel plate are preferred. As components contained in these zinc alloy platings, it is desirable to use cobalt, molybdenum, aluminum etc. These plated steel plates 1 have the advantage that they are inexpensive compared to a stainless steel plate. In order to further improve corrosion resistance, the plated steel plates 1 may be subjected to surface treatment such as chrome treatment or phosphoric acid treatment.

The rubber material for forming the rubber layer 2 is not particularly limited, but a rubber material that has been used in an anti-squeal shim can be used. For example thereof, a rubber obtained by vulcanizing such as acrylonitrile-butadiene rubber (NBR), hydrogenation acrylonitrile-butadiene rubber (H-NBR), styrene-butadiene rubber (SBR), ethylene-propylene rubber (EPDM), or such as fluororubber, silicone rubber can be suitably used. In particular, in view of versatility, oil resistance and heat resistance, NBR is suitable for a rubber material that is suitable for commonly-used brake system. Further, it is preferable to use a vulcanization accelerator in vulcanization so as to stabilize vulcanization condition. For example thereof, vulcanization accelerator such as a dithiocarbamic acid salt vulcanization accelerator or a dithiocarbamate vulcanization accelerator is preferably used. Further, in order to enhance mechanical characteristics such as heat resistance and creep resistance, a reinforcing material may be incorporated.
For example thereof, fiber materials such as rock wool, aramid fiber, carbon fiber, potassium titanate fiber, ceramic fiber and permiculite fiber, and filler materials such as carbon black, magnesium oxide, barium sulfate and graphite can be incorporated either individually or as a combination of two or more thereof.

The method for firmly fixing the rubber layers 2 onto the coated steel plate 1 is not particularly limited, such as a heat-resistant adhesive or baking may be used. For example, adhesive such as a phenolic adhesive or a epoxy adhesive are preferably used. In general, when heat resistance is required, a resin such as a polyamide-imide resin can be used as an adhesive. Further, coating the coated steel plate 1 directly with the rubber material can be also used.

Further, in the first anti-squeal shim, the rubber layer 2 may be firmly fixed onto merely one side of the coated steel plate 1, in addition to the structure shown in the drawing.

Fig. 2 is a cross-sectional view showing a further anti-squeal shim. A rubber layer 2 is firmly fixed onto one side of a plated steel plate 1, and an adhesive layer 20 is formed on the other side thereof. The plated steel plate 1 and the rubber layer 2 are provided by the same method of the first anti-squeal shim as described above.

The adhesive layer 20 constitutes an adhesive portion to a back plate of a disc pad (not shown in the drawings). The adhesive layer 20 comprises a pressure-sensitive adhesive or an adhesive. For example thereof, such as an acrylic, urethanic or silicone pressure-sensitive adhesive, or a thermosetting resin-based, thermoplastic resin-based, elastomeric or hot-melt adhesive can be used. In general, for example, an acrylic pressure-sensitive adhesive that is excellent in cost effectiveness and adhesion properties is preferably used as a pressure-sensitive adhesive. Further, for example, an phenolic resin that is excellent in cost effectiveness, heat resistance and adhesive properties is preferably used as an adhesive. Further, for the protection during storage, a release sheet may be attached on a surface of the adhesive layer 20.

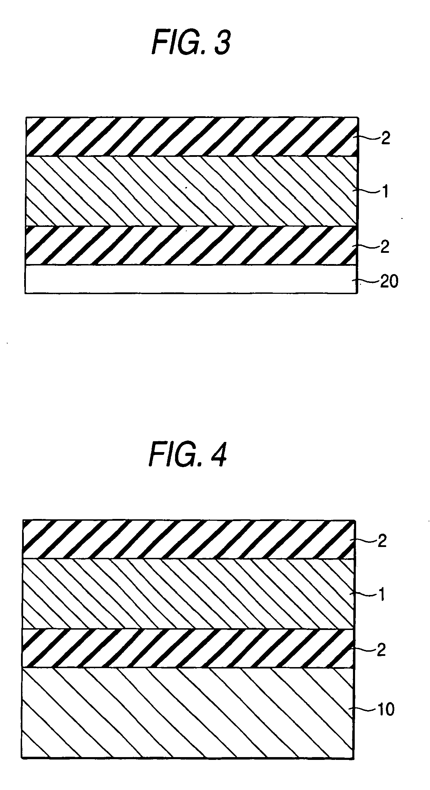

Fig. 3 is a cross-sectional view showing an anti-squeal shim according to the present invention, and an adhesive layer 20 is formed on one rubber layer 2 of the first anti-squeal shim shown in Fig. 1. The adhesive layer 20 is the same as the adhesive layer 20 of the second anti-squeal shim, and the third anti-squeal shim is adhered to a back plate of a brake pad via this adhesive layer 20.

As described above, the second and third anti-squeal shims are each adhered to the back plate of the brake pad by the adhesive layer 20. Further, as shown in Fig. 4, the first anti-squeal shim may be attached to a back plate 10 of a brake pad by additionally using an adhesive or a pressure-sensitive adhesive (not shown), or directly without using an adhesive or a pressure-sensitive adhesive. In the latter case, for example, a periphery of the anti-squeal shim can be held with a periphery of the back plate 10 of the brake pad, although it is not shown in the drawing.

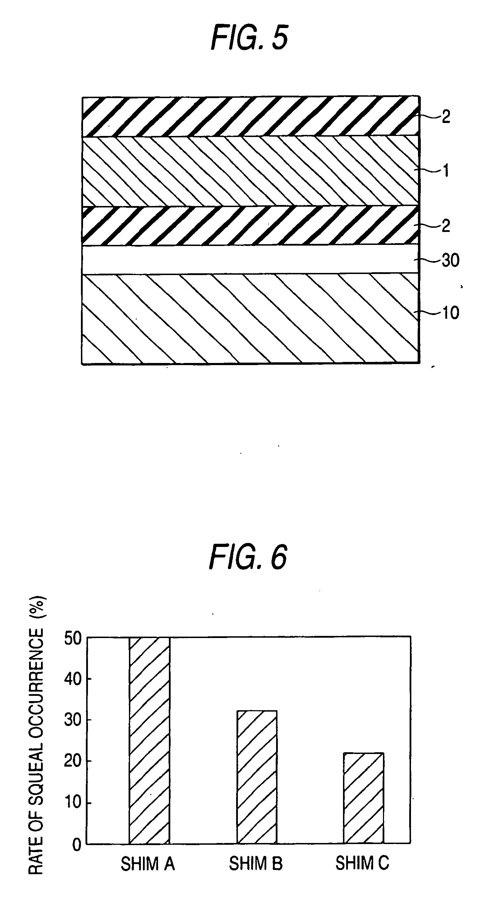

Further, as shown in Fig. 5, the first anti-squeal shim can also be attached to a back plate 10 of a brake pad via a lubricant 30. The lubricant 30 inhibits wear of the rubber layer 2 to maintain the anti-squeal effect for a longer period of time. The kind of lubricant 30 is not particularly limited, and general lubricating oil or grease can be used. In general, for example, a grease, for exclusive use for a brake shim, that is excellent in heat resistance and water resistance is preferably used.

Although the anti-squeal shims of the present invention have been described above, the plate thickness of the plated steel plate 1, the thickness of the rubber layer 2 and the adhesive layer 20, and the amount of the lubricant 30 applied are appropriately selected depending on the specification of a brake system etc. In general, the plate thickness of the plated steel plate 1 is preferably within the range of from 0.4 to 1.0 mm, because thinner than 0.4 mm results in lack of strength, whereas thicker than 1.0 mm causes the problem that the shim is too thick to be inserted between a caliper and the pad.

Further, the thickness of the rubber layer 2 is preferably within the range of from 0.05 to 0.2 mm, because thinner than 0.05 mm results in deterioration of anti-squeal properties required for a brake shim, whereas thicker than 0.2 mm results in easy compression creeping, which causes a problem with regard to durability.

Further, the adhesive layer 20 preferably within the range of from 0.05 to 0.2 mm, because thinner than 0.05 mm results in deterioration of anti-squeal properties required for a brake shim, whereas thicker than 0.2 mm results in easy compression creeping, which causes a problem with regard to durability.

Furthermore, the amount of the lubricant 30 applied is preferably within the range of from 0.3 to 0.6 g, because less than 0.3 g results in an insufficient spread of the lubricant all over the shim to cause deterioration of lubricity, whereas more than 0.6 g results in protrusion of the lubricant from the shim to adhere it to parts such as a rotor, which causes the possibility of deterioration of braking properties.

### EXAMPLES

The present invention will be illustrated in detail with reference to the following examples, but the present invention should not be construed as being limited thereby.

### (1) Spray Test for Salt Water Resistance

Onto both sides of a 0.4 mm-thick zinc alloy electroplated steel plate (Silver Top manufactured by Toyo Kohan Co., Ltd.), 0.1 mm-thick rubber layers comprising NBR into which carbon black was incorporated as a reinforcing material were firmly fixed to prepare test shim A having the structure shown in Fig. 1. Further, the 0.1 mm-thick rubber layer was firmly fixed onto one side of the 0.4 mm-thick zinc alloy electroplated steel plate, and a 0.1 mm-thick adhesive layer comprising an acrylic adhesive was formed on the other side thereof, thereby preparing test shim B having the structure shown in Fig. 2. Furthermore, the 0.1mm-thick rubber layers were firmly fixed onto both sides of the 0.4 mm-thick zinc alloy electroplated steel plate, and the 0.1mm-thick adhesive layer was further provided on a surface of one of the rubber layers, thereby preparing test shim C having the structure shown in Fig. 3. In addition, for comparison, the 0.1mm-thick rubber layers were firmly fixed onto both sides of a cold rolled steel plate (manufactured by Nippon Steel Corp.) to prepare test shim D (see Fig. 7).

The spray test for salt water resistance was performed on the test shims A to D in accordance with JIS K5400.9.1, and the state of rust development after 72 hours was visually evaluated. Results thereof are shown in Table 1. No rust development was observed for test shims A, B and C each using the plated steel plate according to the present invention. In contrast, red rust developed on test shim D using no plated steel plate.

**Table 1**

| | Structure | State of Rust Development after 72 Hours |
|---|---|---|
| Test Shim A | Fig. 1 | No rust developed |
| Test Shim B | Fig. 2 | No rust developed |
| Test Shim C | Fig. 3 | No rust developed |
| Test Shim D | Fig. 7 | Red rust developed |

### (2) Measurement of the Rate of Squeal Occurrence-1

In order to obtain brake squeals close to those which occur in actual automobiles, a brake squeal dynamo tester was used in measurement, because various braking conditions are realizable. Then, disc pads and a rotor relatively liable to generate squeals, and test shim A or D on which the above-mentioned spray test for salt water resistance was terminated were incorporated therein, and a tire was rotated at 50 km/hr. During that, the brake pad temperature was changed by 50 °C within the range of 50 to 250°C, and the brake oil pressure was applied while it was changed plural times within the range of 0.2 to 3.5 MPa corresponding to a temperature at that time, thereby actuating a brake. When a squeal occurred, it was counted as one squeal occurrence. The brake was actuated 2,688 times in total, and the rate of squeal occurrence was determined by dividing the total number of occurrences of squeals by the number of brake actuations (2,688). Further, for comparison, the rate of squeal occurrence was similarly determined also for test shims A and D just after preparation.

Results thereof are shown in Table 2. Test shim D greatly increases in the rate of squeal occurrence after the spray test for salt water resistance, which showed a decrease in the anti-squeal effect derived from the development of rust. In contrast, test shim A according to the present invention did not increase in the rate of squeal occurrence even after the spray test for salt water resistance, which show that the anti-squeal effect is maintained.

**Table 2**

| | | Rate of Squeal Occurrence |
|---|---|---|
| Test Shim A | Before the Spray Test of Salt Water Resistance | 50% |
| | After the Spray Test of Salt Water Resistance | 48% |
| Test Shim D | Before the spray Test of Salt Water Resistance | 51% |
| | After the Spray Test of Salt Water Resistance | 80% |

### (3) Measurement of the Rate of Squeal Occurrence-2

For the above-mentioned test shims B and C after the spray test of salt water resistance, the rate of squeal occurrence was determined in the same manner as with the above-mentioned measurement of the rate of squeal occurrence-1. Results thereof are shown in Fig. 6 as a graph, together with results of test shim A. This shows that both are lower in the rate of squeal occurrence than test shim A.

The results described above show that the use of the plated steel plate according to the present invention controls the development of rust to maintain the anti-squeal effect for a long period of time.

As described above, according to the present invention, the use of the plated steel plate controls the development of rust even when the rubber layers wear away to bring the plate into contact with water, and provides the long-lived anti-squeal shim which achieves the anti-squeal effect for a long period of time.

While the present invention has been described in detail and with reference to specific embodiments thereof, it will be apparent to one skilled in the art that various changes and modifications can be made therein without departing the scope thereof.

## Claims

1. An anti-squeal shim for use in a disc brake that includes a disc rotor, a brake pad, a back plate of the brake pad, and a pressing member for pressing the brake pad toward the disc rotor,
wherein the anti-squeal shim to be interposed between the pressing member and the back plate comprises:
a steel plate(1);
rubber layers (2) which are fixed on both sides of the steel plate (1), and
and adhesive layer (20) formed on one of the rubber layers (2),
**characterized in that**
said steel plate (1) is a plated steel plate (1), wherein the plated steel plate (1) is a zinc alloy electroplated steel plate or a zinc alloy hot-dipped steel plate.

2. The anti-squeal shim according to claim 1, wherein the anti-squeal shim is fixed to the back plate through a lubricant.

## Patentansprüche

1. Scheibe zum Verhindern von Quietschgeräuschen zum Einsatz in einer Scheibenbremse, die einen Scheibenrotor, einen Bremsbelag, eine Bremsbelagrückenplatte und ein Presselement zum Pressen des Bremsbelages in Richtung des Scheibenrotors enthält,
wobei die Scheibe zum Verhindern von Quietschgeräuschen, die zwischen dem Presselement und der Rückenplatte anzuordnen ist, umfasst:
eine Stahlplatte (1);
Gummischichten (2), die an beiden Seiten der Stahlplatte (1) befestigt sind, und
eine Klebeschicht (20), die an einer der Gummischichten (2) ausgebildet ist,
**dadurch gekennzeichnet, dass**
die Stahlplatte (1) eine beschichtete Stahlplatte (1) ist, wobei die beschichtete Stahlplatte (1) eine mit Zinklegierung galvanisch beschichtete Stahlplatte oder eine mit Zinklegierung feuerbeschichtete Stahlplatte ist.

2. Scheibe zur Verhinderung von Quietschgeräuschen nach Anspruch 1, wobei die Scheibe zur Verhinderung von Quietschgeräuschen über ein Schmiermittel an der Rückenplatte befestigt ist.

## Revendications

1. Cale anti-grincement à utiliser dans un frein à disque qui comprend un rotor disque, une plaquette de frein, un disque de fixation de frein de la plaquette de frein, et un élément de pression permettant de presser la plaquette de frein vers le rotor disque,
dans laquelle la cale anti-grincement qui doit être interposée entre l'élément de pression et le disque de fixation de frein comprend ;
une plaque d'acier (1) ;
des couches de caoutchouc (2) qui sont fixées sur les deux côtés de la plaque d'acier (1), et
une couche d'adhésif (20) formée sur une des couches de caoutchouc (2),
**caractérisée en ce que**
ladite plaque d'acier (1) est une plaque d'acier plaqué (1), dans laquelle la plaque d'acier plaqué (1) est une plaque d'acier galvanisé d'alliage de zinc ou une plaque d'acier à chaud d'alliage de zinc.

2. Cale anti-grincement selon la revendication 1, dans laquelle la cale anti-grincement est fixée au disque de fixation de frein par l'intermédiaire d'un lubrifiant.
